# EUROPEAN PATENT APPLICATION

(11) **EP 4 410 560 A1**
(43) Date of publication of application: **07.08.2024**
(21) Application number: 23154873.6
(22) Date of filing: 03.02.2023
(51) Int. Cl.: B41J 11/00, B41J 3/407

(54) **METHOD FOR OPERATING A PRINTING APPARATUS, PRINTING APPARATUS AND SOFTWARE PRODUCT**

(71) Applicant: Canon Production Printing Holding B.V., 5914 HH Venlo (NL)
(72) Inventor: VAN HEIJST, Cornelis P.M., 5914 HH Venlo (NL)
(74) Representative: Canon Production Printing IP Department

(57) **Abstract**

The present invention relates to a method for operating a printing apparatus and an printing apparatus suitable for performing such a method. In particular the present invention relates to a method for operating a printing apparatus, the printing apparatus comprising a page-wide curing array, the printing apparatus being operable in at least a gloss mode and a mixed matt-gloss mode.

## Description

The present invention relates to a method for operating a printing apparatus and an printing apparatus suitable for performing such a method. In particular the present invention relates to a method for operating a printing apparatus, the printing apparatus comprising a page-wide curing array, the printing apparatus being operable in at least a gloss mode and a mixed matt-gloss mode.

### Background of the invention

Methods for operating a printing apparatus using a radiation-curable ink are known in the art. Generally, such methods comprise the step of applying the radiation-curable ink onto a recording medium, e.g. by jetting droplets of the ink using an ink jet printer.

After the ink has been applied onto the recording medium, the ink is hardened by irradiating the ink using a curing unit configured to in operation emit a suitable source of radiation, such as UV radiation. The curing unit may be a page-wide curing array. An example of a printing apparatus comprising a page-wide curing array is disclosed in EP 3481640.

An alternative to a page-wide curing array is a scanning curing array. An example of a printing apparatus comprising a scanning curing is disclosed in EP 3038837. Using a page-wide array has a number of advantages compared to using a scanning curing unit. A page-wide array may irradiate the entire width of a recording medium, whereas a scanning curing unit irradiates on part of the width of the recording medium. Hence, a page-wide curing array may irradiate the ink applied onto the recording medium for a longer time, thereby providing a higher dose of radiation to the ink, which may result in improved curing. In addition, a scanning curing unit needs to be moved in reciprocation in a scanning direction. Appropriate driving means are needed, which increase costs and complexity of the printing apparatus. Further, the movement of the scanning curing unit may cause vibrations in the system.

On the other hand, a scanning curing unit may provide additional possibilities compared to page-wide arrays known from the prior art. EP3890985 describes a printer comprising a scanning curing array and a corresponding method, wherein prints can be made in gloss, matt and mixed matt-gloss modes by controlling the scanning curing unit and the print head carriage. The method described is, however, not suited to be used in a printer having a page-wide curing array.

Therefore a need exists for having a printer and a corresponding method of operation suited for operating in a plurality of mods, including a gloss mode and a mixed matt-gloss mode.

It is therefore an object of the present invention to provide such a method.

It is another object of the present invention to provide an printing apparatus suitable for performing such a method.

### Summary of the Invention

The object of the invention is achieved in a method, the method for operating a printing apparatus, the printing being operable in a plurality of modes, the plurality of modes comprising at least a mixed matt-gloss mode, the printing apparatus comprising:
- a page-wide curing array, configured to in operation emit radiation;
- a scanning print unit, configured to in operation move in a scanning direction;
- medium support for supporting a recording medium;
- a first mirror element configured to in operation receive radiation from the page-wide curing array and reflect the radiation in at least one direction of reflection, the at least one direction of reflection being dependent on a mode of operation of the printing apparatus;
- a second mirror element, the second mirror element being positioned at a lateral edge of the scanning print unit, the second mirror element being configured to in operation receive radiation from the first mirror element in the mixed matt-gloss mode and reflect radiation to a sub-swath, the width of the sub-swath in a direction perpendicular to the scanning direction being smaller than the swath-width;
the method comprising the steps of:
- determining a mode of operation of the printer;
- controlling the scanning print unit to deposit a radiation-curable ink onto the recording medium to print an image swath having a swath-width;
- controlling the page-wide curing array to emit radiation,
- controlling, based on the determined mode of operation of the printer, the first mirror element and the second element to selectively receive and reflect radiation by controlling at least one of a translational and a rotational movement of at least one of the page-wide array, the first mirror element and the second mirror element, wherein in the mixed matt-gloss mode, the radiation emitted by the page-wide curing array is reflected in a first direction and a second direction.

The method may be performed using a printing apparatus. A printing apparatus is also referred to as printer. The printer may be configured to in printing operation apply a radiation-curable fluid. The radiation-curable fluid may be a radiation-curable ink jet ink, such as a UV-curable inkjet ink, for example a UV gel ink. Suitable types of radiation-curable inkjet inks including UV-curable inkjet inks are known in the art. Preferably, the printer may be an inkjet printer, configured to apply ink onto the recording medium by jetting droplets of ink onto the recording medium in a predetermined pattern to form an image.

The printing apparatus comprises a scanning print unit configured to in operation deposit a predetermined pattern of a radiation-curable fluid on a recording medium. The scanning print unit may be an inkjet print head configured to in operation jet ink onto the recording medium. The print head may be for example a thermal inkjet print head or a piezo electric inkjet print head. The printer may comprise a plurality of inkjet print heads. One type or color of ink may be used to form the image, but alternatively more than one type and/or color of ink may be used. A Cyan, a Magenta, a Yellow and a blacK ink may be used to form the image. In addition, one or more of a white ink, brown ink, grey ink, light magenta, light cyan, red, green, orange, purple ink may be used. Further, one or more of a primer composition, an overcoat composition and a metallic ink may be used. The scanning print unit may be configured to in operation move in reciprocation in a scanning direction. The scanning direction may be perpendicular to a medium transport direction.

The printing apparatus may further comprise a medium support. The medium support may be configured to in operation support the recording medium. Optionally, the recording medium may be moved in a medium transport direction. The medium support may comprise a flat table. Optionally, the medium support may comprise an endless belt. The medium support may comprise holes for applying an underpressure. Applying an underpressure may fix the recording medium to the medium support.

Optionally, the printing apparatus may comprise medium transport unit. The medium transport unit may be configured to in operation move the recording medium relative to the printer in the medium transport direction.

The printing apparatus further comprises a page-wide curing array. The page-wide curing array is configured to in operation irradiate a recording medium provided with a radiation-curable fluid. By irradiating the radiation-curable fluid, a chemical reaction may occur in the radiation-curable fluid, which may result in curing or pre-curing of the fluid. The page-wide array may extend in a first direction, the first direction being substantially perpendicular to a direction of relative recording medium transport. The recording medium may move with respect to the scanning print unit. The relative movement may be effected by moving at least one of the recording medium and print unit. The direction of relative movement of the print unit and the recording medium is the relative recording medium transport direction.

The printer may comprise a first mirror element configured to in operation receive radiation from the page-wide curing array and reflect the radiation in a direction of reflection, the direction of reflection being dependent on a mode of operation of the printing apparatus. The mirror element may comprise at least one reflective surface for receiving radiation emitted by the page-wide curing array and reflecting said radiation. The printer may comprise a second mirror element, the second mirror element being positioned at a lateral edge of the scanning print unit, the second mirror element being configured to in operation receive radiation from the first mirror element in the mixed matt-gloss mode and reflect radiation to a sub-swath, the width of the sub-swath in a direction perpendicular to the scanning direction being smaller than the swath-width. In operation, when printing a swath, part of the swath (i.e. the sub-swath) may receive radiation reflected by the second mirror element, thereby creating a matt image in the sub-swath. The remainder of the swath may not receive radiation. This part of the image may not be irradiated by radiation reflected by the second mirror element. The area of the recording medium that receives radiation may be controlled e.g. by controlling the width of the bundle of radiation and/or suitably positioning the second mirror element with respect to the recording medium.

The method may comprise the step of determining a mode of operation of the printer, wherein the printer is operable in at least a mixed matt-gloss mode. In the mixed matt-gloss mode, the printer may be configured to print an image having matt portions and glossy portions. Matt portions are areas of the images having low gloss, glossy portions are areas of the images having high gloss. The glossiness of the image can be influenced by the timing between deposition of the ink on the recording medium and irradiating the ink deposited onto the recording medium.

When operating the printer in the mixed matt-gloss mode, the image may be divided into two sub-images; a matt sub image containing all the matt portions of the image and a glossy sub-image containing all the glossy portions of the image. Together, the matt sub-image and the gloss sub-image formed a mixed matt-gloss image. The two sub-images may be printed by separate print heads or separate sections of a print head. For example, the print unit may comprise at least one ink jet print head, the at least one inkjet print head comprising a plurality of nozzles. The nozzles of the print head may form at least a first group and a second group. The nozzles of the first group are configured to print a sub-swath, the width of the sub-swath in a direction perpendicular to the scanning direction being smaller than the swath-width. In operation, the sub swath receives radiation reflected by the second mirror element. The time interval between deposition of the ink by the first group of nozzles and irradiation of the ink may be short, thereby resulting in a matt area of the image.

The nozzles of the second group are configured to print the remainder of the swath. In operation, the remainder of the does not receive radiation reflected by the second mirror element. The time interval between deposition of the ink by the second group of nozzles and irradiation of the ink may be relatively long, thereby resulting in a glossy area of the image. Preferably, the sub-swath is positioned upstream, in the transport direction, with respect to the remainder of the swath.

The ratio between the number of nozzles of the first group and the number of nozzles of the second group may be suitably selected. The number of nozzles of the first group may be equal to the number of nozzles of the second group. Alternatively, the number of nozzles of the first group may be different from the number of nozzles of the second group; for example, the number of nozzles of the first group may be larger than the number of nozzles of the second group.

Optionally, the printer may be operable in further modes of operation, such as a gloss mode and/or a matt mode. In a gloss mode, the printer may be configured to print an image onto the recording medium having high gloss. In the matt mode, the printer may be configured to print an image onto the recording medium having low gloss. An image having a low gloss is also referred to as a matt image. The mode of operation of the printer may be determined by an operator. Alternatively, the mode of operation may be determined by a control unit of the printer. It may be determined e.g. based on a predetermined set of parameters using an algorithm.

The method may further comprise the step of controlling the scanning print unit to deposit a radiation-curable ink onto the recording medium. The scanning print unit may deposit a predetermined amount of ink onto the recording medium, thereby forming an image onto the recording medium. Only one type of ink may be deposited or alternatively, a plurality of different inks may be deposited in a predetermined pattern. For example, different colors of ink may be applied in a predetermined pattern to form a multi-colored image.

The method may further comprise the step of controlling the page-wide curing array to emit radiation. The page-wide curing array may emit radiation. The radiation may be of a type suitable to induce a polymerization reaction in the ink, thereby hardening the ink. Controlling the page-wide curing array may include for example switching (individual units of) the page-wide curing array one or off and/or changing the power output of the page-wide curing array.

The method further comprises the step of controlling, based on the determined mode of operation of the printer, the first mirror element and the second element to selectively receive and reflect radiation by controlling at least one of a translational and a rotational movement of at least one of the page-wide array, the first mirror element and the second mirror element, wherein in the mixed matt-gloss mode, the radiation emitted by the page-wide curing array is reflected in a first direction and a second direction.

By controlling at least one of a rotational and translational movement of at least one of the page-wide array, the first mirror element and the second mirror element, it may be controlled whether the first mirror element and/or second mirror element receive radiation and in what direction said mirror elements reflect the radiation. Optionally, the relative position and/or orientation of the page-wide curing array with respect to other part of the printer, such as, but not limited to, the medium support, the scanning print unit, the first mirror element and the second mirror element may be adjusted. By suitably controlling the reflection of the radiation by the first and second mirror element, the gloss of the image may be controlled.

In the mixed matt-gloss mode, the first direction may be a direction directed towards an area of the recording medium positioned downstream, in the direction of recording medium transport, with respect to the scanning print unit. Preferably, the first direction is a direction directed from the first mirror element to an area of the recording medium positioned downstream, in the direction of recording medium transport, with respect to the scanning print unit. In the mixed matt-gloss mode, the second direction may be a direction form the first mirror element to the second mirror element. The second mirror element may further reflect the radiation, for example to part of the swath being printed, i.e. a sub-swath.

In an embodiment, wherein the printer further comprises a radiation blocking element configured to in operation block part of the radiation reflected by the second mirror. The blocking element may be made of a material suitable to block radiation. The blocking element may be made of a material that is not transparent for the type of radiation used. In the mixed matt-gloss mode, only a sub-swath, which is a part of the swath, is irradiated shortly after printing. It is desired to protect the remainder of the swath against radiation, as otherwise the different in gloss and matt in the single print may not be obtained or may not be obtained in the desired level. The blocking element may block part of the radiation reflected by the second mirror, thereby preventing the remainder of the swath from receiving radiation reflected by the second mirror element. Preferably, the part of the swath prevented from receiving radiation is a downstream part of the swath, in a direction of recording medium transport. The upstream part, in a direction of recording medium transport, may not be prevented from receiving radiation. Preferably, the blocking element may be mounted on the scanning print unit.

In an embodiment, the printer is further operable in a gloss mode, the direction of reflection is a direction from the first mirror element to an area of the recording medium positioned downstream of the scanning print unit in a direction of recording medium transport.

In the gloss mode, the radiation emitted by the page-wide curing array may be reflected by the first mirror element in a direction of reflection. In the glossy mode, the direction of reflection may be a direction from the first mirror element to an area of the recording medium positioned downstream of the scanning print unit in a direction of recording medium transport. Thus, in the glossy mode, the radiation emitted by the page-wide array is reflected via the first mirror element to a position downstream of the scanning print unit in a direction of recording medium transport. Thus, in the glossy mode, the time interval between depositing the ink and irradiating the ink may be relatively long, thereby resulting in a glossy image.

In an embodiment, the printer is further operable in a matt mode, the printer further comprising a third mirror element, in the matt mode the first mirror element reflecting radiation in a third direction, the third direction being directed from the first mirror element to the third mirror element, the third mirror element being configured to reflect radiation to the image swath. The image swath may be the swath that is being printed at the moment the radiation is reflected to said swath. This swath may also be referred to as the current swath or present swath. Preferably, the third mirror element may reflect the radiation such that the entire swath is irradiated. The radiation may be controlled to be reflected by the first mirror element to the third mirror element in the matt mode. In the matt mode, the page wide curing array, the first mirror element and the third mirror element may be positioned such that the radiation emitted by the page-wide array is reflected via the first mirror element to the third mirror element. This may be done by at least one of a translational and rotational movement of at least one of the page-wide array, the first mirror element and the third mirror element. Optionally, the second mirror element may also move relative to at least one of the page-wide curing array, the first mirror element and the third mirror element. Optionally, the third direction may be parallel to the second direction.

In a further embodiment, the third mirror element may have a fixed position with respect to the page-wide curing array. Optionally, third mirror element may have a length extending in the scanning direction that is essentially the same as the length of the page-wide curing array in the scanning direction.

In an embodiment, the first mirror element comprises at least a first mirror surface and a second mirror surface, wherein at least one of the first and second mirror surfaces receives radiation emitted by the page-wide array.

The orientation and/or shape of the first mirror surface may differ from the shape and/or orientation of the second mirror surface. Consequently, irradiation of the first mirror surface may result in a different direction of reflection compared to irradiation of the second mirror surface. By controlling the relative position of the page-wide curing array and the first mirror element, the radiation may be suitable provided to at least one of the first and second mirror surfaces of the first mirror element. Hence, by controlling the relative position of the page-wide curing array and the first mirror element, the direction of reflection may be controlled.

In a further embodiment, in the mixed matt-gloss mode both the first and second mirror surfaces receives radiation emitted by the page-wide array.

In the mixed matt-gloss mode of operation, both the first and second mirror surfaces may receive radiation. One of the first and second surface may reflect the radiation towards the second mirror element. The second mirror element may reflect the radiation towards an area of the recording medium that is part of a present swath. Thus, this area may receive radiation shortly after ink is deposited onto said area. Hence, the time interval between depositing the ink and irradiating the ink may be short in said area, resulting in the formation of a matt image. The other one of the first and second surface may reflect the radiation towards an area of the recording medium downstream of the scanning print unit. This area may not yet have received radiation. Thus, this area may receive radiation after a certain time interval after ink is deposited onto said area. The time interval may be more than 1 second, preferably more than 5 seconds. Hence, the time interval between depositing the ink and irradiating the ink may be long in said area, resulting in the formation of a gloss image. Hence, the image formed may have gloss areas and matt areas. The radiation reflected by the other one of the first and second surface may further provide an additional doses of radiation to the area that was already irradiated by the one of the first and second surface after deposition of ink, which may improve the curing level of the ink.

Optionally, also in the matt mode both the first and second mirror surfaces receives radiation emitted by the page-wide array. In the matt mode, the entire image may receive radiation shortly after being deposited onto the recording medium. This radiation may be reflected by a first one of the first and second mirror surfaces and optionally by further mirror elements. Thus, the image may be matt. At a later stage, the entire image may receive a further doses of radiation. That radiation may be reflected by a second one of the first and second mirror surfaces and optionally by further mirror elements.

In a further embodiment, the receipt of radiation emitted by the page-wide array by the at least one of the first and second mirror surface is controlled by a relative translational movement of the page-wide array with respect to the first mirror element in the z-direction.

The z-direction is a direction perpendicular to both the medium transport direction and the scanning direction. In operation, there may be at least three relative orientation of the page-wide curing array and the first mirror element. In a first orientation, the relative orientation of the page-wide curing array and the first mirror element is such that the first mirror surface of the first mirror element is irradiated, whereas the second mirror surface of the first mirror element is not. In a second orientation, the relative orientation of the page-wide curing array and the first mirror element is such that both the first mirror surface and the second mirror surface of the first mirror element are irradiated. In a third orientation, the relative orientation of the page-wide curing array and the first mirror element is such that the second mirror surface of the first mirror element is irradiated, whereas the first mirror surface of the first mirror element is not.

In an embodiment, the scanning print unit is provided with a shielding element, the shielding element being configured to in operation in the matt mode preventing radiation from reaching the scanning print unit.

During printing, the scanning print unit moves in reciprocation in the scanning direction. During the scanning movement, ink is deposited onto the recording medium, thereby forming a part of an image. This part of an image is called a swath. When the printer is operated in the matt mode, the ink deposited in a swath needs to be irradiated. However, it is unwanted that the print unit is irradiated. Irradiating the print unit may cause unwanted effects, such as nozzle clogging, which may hamper the formation of droplets, or curing of the ink on the nozzle plate, which may also hamper proper droplet ejection. In this embodiment, the scanning print unit is provided with a shielding element to prevent the print head from being irradiated. The shielding element may optionally be mounted on the scanning print unit. Alternatively, the shielding element may not be mounted on the scanning print unit, but may be moved in the scanning direction during printing to prevent the print unit form being irradiated.

In a further embodiment, the shielding element has a length extending in the scanning direction, the length of the shielding element being essentially the same as the length of the scanning print unit.

The shielding element may prevent the print head from being irradiated. The shielding element may not extent beyond the lateral edges of the print unit to allow radiation form reaches freshly deposited ink during printing.

In an embodiment, the first mirror element has a length extending in the scanning direction, the length of the first mirror element being essentially the same as the length of the page-wide array.

If the first mirror element and the page-wide array have essentially the same length, the first mirror element may receive radiation from the page-wide curing array over the entire length of the mirror and may efficiently reflect said radiation. Moreover, the page-wide array may emit radiation and this radiation, may be reflected by the first mirror element, with no or little loss at the side edges.

In an embodiment, the second mirror element is positioned at a lateral edge of the scanning print unit.

The scanning print unit may in operation move in reciprocation in the scanning direction. During the scanning movement, the print unit may print a swath of an image. The second mirror element may reflect radiation reflected by the first mirror element in at least the mixed matt-gloss mode. When printing mixed matt-gloss images, it is preferred that the ink deposited on the recording medium forming a matt section of the image is irradiated shortly after being deposited. By positioning the second mirror element at a lateral edge of the scanning print unit, the second mirror may reflect radiation towards the sub-swath of the image printed on the recording medium. The print head itself may not receive radiation, which may prevent unwanted curing of ink in or around the printing unit. The second mirror element may be mounted on the scanning print head. Alternatively, the second mirror element may not be mounted on the scanning print head, but may be configured to move in reciprocation in the scanning direction, like the scanning print unit.

In an embodiment, the second mirror element comprises two mirror surfaces, a first mirror surface being positioned at a first lateral edge of the scanning printing unit and second mirror surface being positioned at a second lateral edge of the scanning printing unit.

The scanning print unit move in reciprocation during printing and may print during a forward and a backward movement in the scanning direction. In this embodiment, the second mirror element comprises two mirror surfaces, a first mirror surface being positioned at a first lateral edge of the scanning printing unit and second mirror surface being positioned at a second lateral edge of the scanning printing unit. Both mirror surfaces may reflect radiation during printing or alternatively, only one of the mirror surfaces may receive radiation.

By having a first mirror surface being positioned at a first lateral edge of the scanning printing unit and second mirror surface being positioned at a second lateral edge of the scanning printing unit, the time between deposition of the ink and irradiation of the ink may be the same in the forward movement in the scanning direction and the backward movement in the scanning direction. A constant time interval between deposition of the ink and irradiation of the ink may prevent print artefacts, such as gloss differences in the print. The second mirror element may be mounted on the scanning print head. The first and second mirror surfaces may be mounted on the scanning print head. Alternatively, the first and second mirror surfaces may not be mounted on the scanning print head, but may be configured to move in reciprocation in the scanning direction, like the scanning print unit. Preferably, the printer comprises a first and a second radiation blocking element, provided at both lateral sides of the print head.

In a further embodiment, the printer may further comprise a fourth mirror element, the fourth mirror element being positioned at a front end of the scanning print unit. The fourth mirror element may be positioned -in the scanning direction- in between the first and second mirror surfaces of the second mirror element. The fourth mirror element may reflect radiation reflected by the first mirror element and may reflects said radiation to an area of the recording medium positioned downstream in a direction of media transport. The radiation reflected by the fourth mirror may not irradiate the print unit, which may prevent unwanted curing within the print head or at the surface of the print unit. Further, the radiation reflected to an area of the recording medium positioned downstream in a direction of media transport may even further improve the curing level of the ink applied onto the recording medium.

In an embodiment, the third mirror element is operable in two reflecting modes, wherein in the matt mode the third mirror element is operated in a first reflecting mode and in the mixed matt-gloss mode the third mirror element is operated in a second reflecting mode, wherein in the first reflecting mode radiation is reflected from the first mirror element, via the third mirror element, to a current swath on the recording medium, and wherein in the second reflecting mode radiation is reflected from the first mirror element, via the third mirror element, to an area of the recording medium downstream of the scanning print unit. Preferably, in the second reflecting mode only an area, restricted in the scanning direction by the two lateral edges of the scanning print unit, is irradiated. Since the scanning print unit moves during printing operation, said area may thus change position during printing.

Preferably, the third mirror element comprising two mirror surfaces, wherein in the first reflecting mode the radiation is reflected by a first mirror surface and in the second reflecting mode the radiation is reflected by a second mirror surface. The third mirror element may be movable, for example rotatable of pivotable, to switch between the two reflecting modes.

Preferable, the first mirror element, the second mirror element and the third mirror element may be positioned with respect to one another such that radiation is reflected by the first mirror element to both the second mirror element and the third mirror element.

In an alternative embodiment, the third mirror element may comprise a first surface being a reflecting surface and a second surface being an absorbing surface. The third mirror element may be operable in a reflecting mode and an absorbing mode. In the reflecting mode radiation is reflected from the first mirror element, via the first surface of the third mirror element, to a current swath on the recording medium. In the absorbing mode, radiation is reflected from the first mirror element to the second surface of the third mirror element. The radiation may be absorbed by the second surface of the third mirror element. By absorbing the radiation, it may be prevented that the radiation reaches areas where it might induce unwanted effects, such as unwanted curing at a nozzle surface of the print head.

In an embodiment, the page wide curing array comprising a number of individually controllable units, the individually controllable units being arranged along the first direction, the individually controllable units being configured to in operation emit radiation, wherein the individually controllable units are operable in at least two modes, the at least two modes including an Off mode and an On mode, wherein the individually controllable units are controlled to be in a mode other than the OFF mode if there are positioned such that the radiation emitted by these elements is reflected towards the second mirror element.

The page-wide curing array may comprise a plurality of radiation emitting units. The radiation emitting units may be individually controllable. The radiation emitting elements may be controlled e.g. by controlling the amount of power supplied to the individual radiation emitting elements. The individually controllable units are operable in at least two modes, the at least two modes including an Off mode and an On mode. The individual radiation emitting elements may be controlled to be in one of the at least two modes. Preferably, each one of the individually controllable units is controlled to be in one of the at least two modes, wherein the mode of a first unit may be the same or different than the mode of a second unit. In the Off mode, the radiation emitting unit may not emit radiation. In case a radiation emitting unit is in the Off mode, and no radiation is emitted by that individual radiation emitting unit, that radiation emitting unit may not (locally) induce a polymerization reaction in the ink to pin or cure the ink. In the On mode, the radiation emitting unit may emit radiation. Optionally, the radiation emitting may be operable in more than two modes. The individually controllable radiation emitting units may be individually controlled and the plurality of individually controllable mode may each be operated independent from one another.

The individually controllable units are controlled to be in a mode other than the OFF mode if there are positioned such that the radiation emitted by these elements is reflected towards the second mirror element. Thus, the second mirror element may receive radiation emitted by the page-wide curing array. This radiation may be reflected towards the recording medium to cure the ink. Preferably, the individually controllable units, which are positioned such that the radiation emitted by these elements is not reflected towards the second mirror element, are controlled to be in the OFF mode. An advantage thereof is that energy may be saved.

In a further embodiment, the plurality of radiation emitting units may be arranged in a plurality of rows, the rows extending in the scanning direction. Each row may optionally be subdivided into a plurality of radiation emitting units. In operation, the individually controllable units may be controlled independently. The individually controllable units of a first row may be configured to in operation reflect radiation towards the second mirror element. The individually controllable units of the other of a second row may be configured to in operation reflect radiation towards the second mirror element. The individually controllable units of the first row may be controlled to be in a mode other than the OFF mode if there are positioned such that the radiation emitted by these elements is reflected towards the second mirror element. The individually controllable units of the first row may be controlled to be in the OFF mode if there are not positioned such that the radiation emitted by these elements is reflected towards the second mirror element. The individually controllable units of the second row may be controlled to be in a mode other than the Off mode independent of their position.

In an aspect of the invention, a printing apparatus is provided, the printing apparatus comprising:
- a page-wide curing array, configured to in operation emit radiation;
- a scanning print unit, configured to in operation move in a scanning direction;
- medium support for supporting a recording medium;
- a first mirror element configured to in operation receive radiation from the page-wide curing array and reflect the radiation in at least one direction of reflection, the at least one direction of reflection being dependent on a mode of operation of the printing apparatus;
- a second mirror element, the second mirror element being positioned at a lateral edge of the scanning print unit;
- a control unit, configured to in operation control the printing apparatus to perform a method according to the present invention.
The printer is thus configured to perform a method according to the present invention.

In a further aspect of the invention a software product is provided, the software product comprising program code on a non-transitory machine-readable medium, wherein the program code, when loaded into a controller of a printing apparatus with at least one printing unit for depositing a radiation-curable fluid, a page-wide curing array and a control unit, causes the controller to perform a method according to the present invention.

### BRIEF DESCRIPTION OF THE DRAWINGS

The present invention will become more fully understood from the detailed description given herein below and the accompanying drawings which are given by way of illustration only, and thus are not limitative of the present invention, and wherein:
Fig. 1 is a schematic perspective view of a first example of a printing system according to the present invention in a first printing mode;
Fig. 2 is a schematic perspective view of a second example of a printing system according to the present invention in a second printing mode;
Fig. 3 is a schematic diagram of a control unit of a reprographic system according to Fig. 1 or 2;
Fig 4A shows a schematic side view of a first example of the method according to present invention;
Fig 4B shows a schematic side view of a second example of the method according to present invention;
Fig 4C shows a further schematic side view of the first example of the method according to present invention;
Fig 5 shows a schematic side view of a third example of the method according to present invention;
Fig 6 shows a schematic side view of a fourth example of the method according to present invention;
Fig. 7A shows a schematic side view of a fifth example of the method according to present invention in a first mode of operation;
Fig. 7B shows a schematic top view of a fifth example of the method according to present invention;
Fig. 8A shows a schematic side view of a sixth example of the method according to present invention;
Fig. 8B-8D show schematic view of a seventh example of the method according to present invention;
Fig. 9A-9C show schematic view of a eighth example of the method according to present invention;
Fig. 10A shows a schematic side view of a nineth example of the method according to present invention in a first mode of operation;
Fig. 10B- 10C show schematic top views of a nineth example of the method according to present invention;

In the drawings, same reference numerals refer to same elements.

### DETAILED DESCRIPTION OF THE PREFERRED EMBODIMENTS

The present invention will now be described with reference to the accompanying drawings, wherein the same reference numerals have been used to identify the same or similar elements throughout the several views.

### Printing system

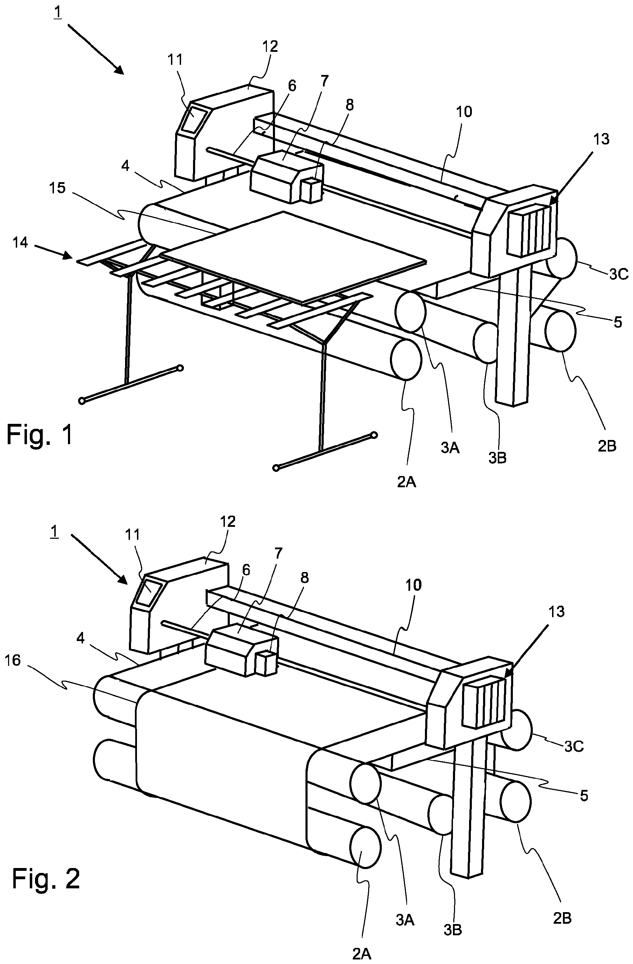

Fig. 1 shows a printing apparatus. A printing apparatus is also known as printer. The printing apparatus 1 comprises an scanning printing unit 7 for printing on a recording medium 15. The recording medium 15 in Fig. 1 is a relatively rigid substrate, such as a panel. The recording medium 15 is supplied from a media input unit 14, which may be configured for storing a plurality of such print media 15 and supplying these to the printer 1. The printer 1 comprises a medium support 4. Printer 1 may further comprise transport means for receiving and transporting the recording medium 15 along the scanning printing unit 7. In Fig. 1, the medium support is embodied as an endless belt 4. The endless belt is an endless transport belt 4 supported on a plurality of support rollers 3A, 3B, 3C. At least one of the support rollers 3A, 3B, 3C is provided with driving means for moving the belt 4. The belt 4 is therefore configured to support and transport the recording medium. Additionally, one or more one of the support rollers 3A, 3B, 3C may be configured to be moved and/or tilted to adjust and control the lateral position of the belt 4. The scanning printing unit 7 may be provided with a sensor 8, such as a CCD camera, to determine the relative position of belt 4 and/or the recording medium 15. Data from said sensor 8 may be applied to control the position of the belt 4 and/or the recording medium 15. The belt 4 is further provided with through-holes and a suction box 5 in connection with a suction source (not shown), such that an underpressure may be applied to the recording medium 15 via the through-holes in the belt 4. The underpressure adheres the recording medium 15 flatly to the belt 4 and prevents displacement of the recording medium 15 with respect to the belt 4. Due to this holding the belt 4 is able to transport the recording medium 15. It will be appreciated that other suitable transport means, such as rollers, steppers, etc, may alternatively be applied. The recording medium 15 may be transported stepwise and/or in continuous movement. The scanning printing unit 7 is configured to translate along a first guide beam 6 in a scanning direction. The scanning direction is perpendicular to the direction in which the print medium is transported by the belt 4. The scanning printing unit 7 holds a plurality of print heads (not shown), which are configured to jet a plurality of different marking materials (different colors of ink, primers, coatings, etc.) on the recording medium 15. Each marking material for use in the scanning printing unit 7 is stored in one of a plurality of containers arranged in fluid connection with the respective print heads for supplying marking material to said print heads to print an image on the recording medium 15.

The application of the marking material, such as the radiation-curable ink from the printing units is performed in accordance with data provided in the respective print job. The printing unit may comprise one or more inkjet print heads. The timing by which the droplets of marking material are released from the one or more print heads determines their position on the recording medium 15. The timing may be adjusted based on the position of the scanning printing unit 7 along the first guide beam 6. The above mentioned sensor 8 may therein be applied to determine the relative position and/or velocity of the scanning printing unit 7 with respect to the recording medium 15. Based upon data from the sensor 8, the release timing of the marking material may be adjusted.

Upon ejection of the marking material, some marking material may be spilled and stay on a nozzle surface of the print heads. The marking material present on the nozzle surface, may negatively influence the ejection of droplets and the placement of these droplets on the recording medium 15. Therefore, it may be advantageous to remove excess of marking material from the nozzle surface. The excess of marking material may be removed for example by wiping with a wiper and/or by application of a suitable anti-wetting property of the surface, e.g. provided by a coating.

The marking materials may require treatment to properly fixate them on the print medium. Thereto, a fixation unit is provided downstream of the scanning printing unit 7. The fixation unit may emit radiation to facilitate the marking material fixation process. In the example of Fig. 1, the fixation unit is page-wide curing array 10. The page-wide curing array 10 extends in the main scanning direction. The page-wide curing array does not move in operation in the main scanning direction. The page-wide array may move in the direction of medium transport, which is a direction perpendicular to the scanning direction.

The page-wide curing array 10 is configured to in operation emit radiation of certain frequencies, which interacts with the marking materials, for example UV light in case of UV-curable inks. Optionally (not shown), the scanning printing unit 7 may be provided with a further fixation unit on the same carriage which holds the print heads. This further fixation unit can be used to (partially) cure and/or harden the marking materials, independent of or interaction with the page-wide curing array 10.

After printing and fixation, the recording medium 15 is transported to a receiving unit (not shown). The receiving unit may comprise a take-up roller for winding up the recording medium 15, a receiving tray for supporting sheets of recording medium 15, or a rigid media handler, similar to the media input unit 14. Optionally, the receiving unit may comprise processing means for processing the medium 8, 9 after printing, e.g. a post-treatment device such as a coater, a folder, a cutter, or a puncher.

Printing apparatus 1 furthermore comprises a user interface 11 for receiving print jobs and optionally for manipulating print jobs. The local user interface unit 11 is integrated to the print engine and may comprise a display unit and a control panel. Alternatively, the control panel may be integrated in the display unit, for example in the form of a touch-screen control panel. The local user interface unit 11 is connected to a control unit 12 connected to the printer 1. The control unit 12, for example a computer, comprises a processor adapted to issue commands to the printer 1, for example for controlling the print process. The printer 1 may optionally be connected to a network. The connection to the network can be via cable or wireless. The printer 1 may receive printing jobs via the network. Further, optionally, the control unit 12 of the printer 1 may be provided with an input port, such as a USB port, so printing jobs may be sent to the printer 1 via this input port.

### Hybrid printing system

The printer 1 in Fig. 1 is a so-called hybrid printer, capable of handling both flexible media and rigid substrates. In Fig. 1, the printer 1 operates in a first print mode, wherein the printer 1 is configured for transporting rigid substrates, such as the recording medium 15. Such rigid print media 15 may be panels, for example panels for doors or walls, corrugated media, plates formed of plastic or metal, etc. To handle these rigid print media 15, the printer 1 in Fig. 1 is configured with a substantially linear transport path: from the media input device 14, the recording medium 15 moves forward along the scanning printing unit 7 at a substantially constant height. The media input unit 14 and the receiving unit are positioned at the level of the medium support surface of the belt 4. In Fig. 2, a flexible web medium 16 is supplied to the printer 1, which web medium 16 may be composed of e.g. paper, label stock, coated paper, plastic or textile. The web medium 16 is supplied from the input roller 2A and extends across the belt 4 to the take-up roller 2B, where the web medium 16 is re-wound. The printer 1 is configured to swiftly and efficiently switch between print modes.

### Control

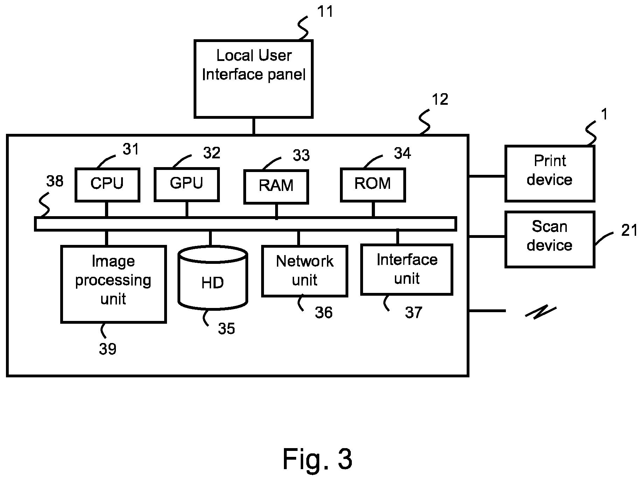

An embodiment of the control unit 12 is in more detail presented in Fig. 3. As shown in Fig. 3, the control unit 12 comprises a Central Processing Unit (CPU) 31, a Graphical Processor Unit (GPU) 32, a Random Access Memory (RAM) 33, a Read Only Memory (ROM) 34, a network unit 36, an interface unit 37, a hard disk (HD) 35 and an image processing unit 39 such as a Raster Image Processor (RIP). The aforementioned units 31 - 37 are interconnected through a bus system 38. However, the control unit 12 may also be a distributed control unit.

The CPU 31 controls the printing system 1 in accordance with control programs stored in the ROM 34 or on the HD 35 and the local user interface panel 5. The CPU 31 also controls the image processing unit 39 and the GPU 32. The ROM 34 stores programs and data such as boot program, set-up program, various set-up data or the like, which are to be read out and executed by the CPU 31. The hard disk 35 is an example of a non-volatile storage unit for storing and saving programs and data which make the CPU 31 execute a print process to be described later. The hard disk 35 also comprises an area for saving the data of externally submitted print jobs. The programs and data on the HD 35 are read out onto the RAM 33 by the CPU 31 as needed. The RAM 33 has an area for temporarily storing the programs and data read out from the ROM 34 and HD 35 by the CPU 31, and a work area which is used by the CPU 31 to execute various processes. The interface unit 37 connects the control unit 12 to the client devices, such as scan device 21 and to the printing system 1. The network unit 36 connects the control unit 12 to the network N and is designed to provide communication with the workstations (not shown) and with other devices 21 reachable via the network N. The image processing unit 39 may be implemented as a software component running on an operation system of the control unit 12 or as a firmware program, for example embodied in a field-programmable gate array (FPGA) or an application-specific integrated circuit (ASIC). The image processing unit 39 has functions for reading, interpreting and rasterizing the print job data. Said print job data contains image data to be printed (i.e. fonts and graphics that describe the content of the document to be printed, described in a Page Description Language or the like), image processing attributes and print settings.

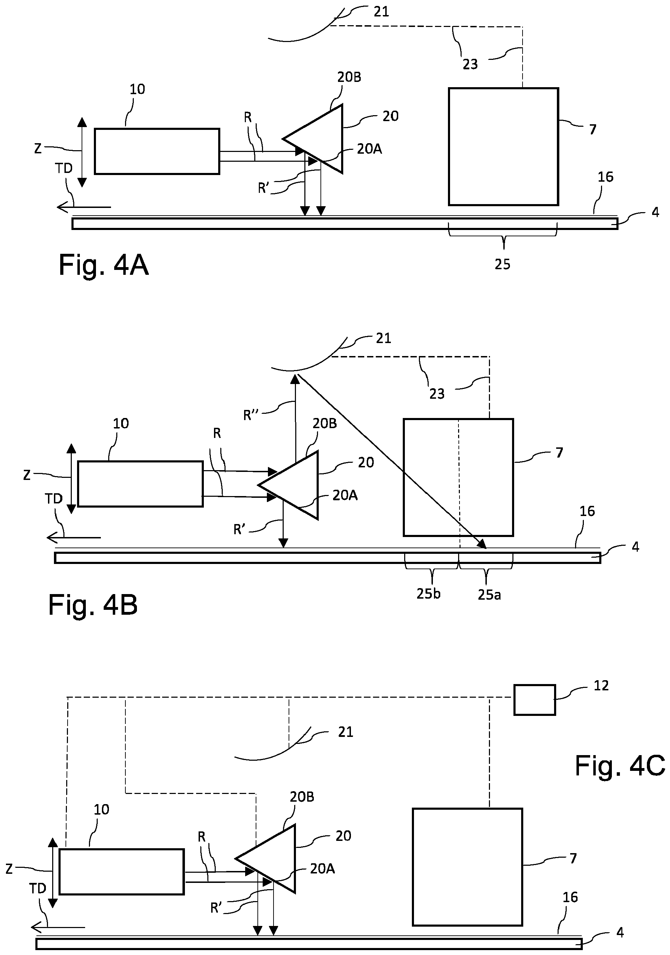

Fig 4A shows a schematic side view of a first example of the method according to the present invention.

A scanning print unit 7 is provided to move in reciprocation in a scanning direction (not shown). The scanning print unit is positioned above a recording medium 16. The recording medium 16 is supported by the medium support 4. The recording medium 16 is moved in a medium transport direction (TD). The medium transport direction is also referred to as transport direction or direction of recording medium transport. The scanning print unit 7 during printing applies ink onto the recording medium 16 (not shown), thereby forming an image swath 25. The image swath 25 is the swath that is printed by the scanning print unit 7 in the example shown in Fig. 4A. It is referred to as the current swath. After a swath is finished, the recording medium 16 may move in the transport direction TD and a subsequent swath may be formed. By forming a plurality of swaths, an image may be formed on the recording medium 16.

A page-wide curing array 10 is provided. The page-wide curing array 10 is configured to in operation emit radiation R. The radiation R emitted is directed towards the first mirror element 20. In the example shown in Fig. 4A, the first mirror element 20 is a triangular mirror element comprising a first mirror surface 20A and a second mirror surface 20B. The page-wide curing array is moveable in the Z-direction. By adjusting the relative position of the page-wide curing array 10 and the mirror element 20, the direction of reflected can be adjusted. Alternatively, the first mirror element may be moveable in the Z-direction to adjust the relative orientation of the first mirror element 20 and the page-wide curing array 10.

In the example shown in Fig. 4A, the printing apparatus is operated in a first mode of operation. In the first mode of operation, glossy prints are printed. The page-wide curing array 10 and the first mirror element 20 are positioned such that the radiation R emitted by the curing array 10 is reflected by the first mirror surface 20a of the first mirror element 20. The radiation is reflected in a direction R'. This is a direction from the first mirror element towards an area of the recording medium downstream in the transport direction with regard to the scanning print unit 7. In the example shown in Fig. 4A, the angle between the radiation R and the reflected radiation R' is 90°. However, alternatively, this angle may be larger or smaller, provided the radiation is reflected to an area of the recording medium downstream in the transport direction with regard to the scanning print unit 7. Since radiation is provided at a position downstream of the scanning print unit 7 in the transport direction, there is a relatively large time interval between applying the ink onto the recording medium 16 and curing the ink, which may result in a glossy image.

Further, a second mirror element 21 is provided. In the example shown in Fig. 4A, the second mirror element does not receive radiation reflected by the first mirror element. The second mirror element 21 is connected to the scanning print unit 7. The connection is schematically depicted by dashed lines 23. Alternatively, the second mirror element 21 may be connected to other parts of the printer, such as the frame of the printer. Optionally, the second mirror element 21 may be movable with respect to the scanning print unit 7.

Fig 4B shows a schematic side view of a second example of the method according to the present invention. Like in the first example, shown in Fig. 4A, a page-wide curing array 10, a scanning print unit 7, a first mirror element 20 and a second mirror element 21 are provided. The relative orientation of the page-wide curing array 10 and the first mirror element 20 is different from the orientation shown in Fig 4A; the curing array is moved in the z-direction compared to the example shown in Fig. 4A. In the example shown in Fig. 4A, the printing apparatus is operated in a second mode of operation. In the second mode of operation, mixed matt-gloss prints are printed. Mixed matt-gloss prints are prints having areas having low gloss and areas having high gloss. In the example shown in Fig. 4B, the radiation R emitted by the curing array 10 is reflected in a first direction and a second direction. The first direction is the direction from the first mirror element 20 to an area of the recording medium downstream in the transport direction with regard to the scanning print unit. This radiation R' is reflected by the first mirror surface 20a of the first mirror element 20. The second direction is the direction from the first mirror element 20 to the second mirror element 21. This radiation R" is reflected by the second mirror surface 20b of the first mirror element 20. The radiation R" is reflected towards the second mirror element 21. Further, this radiation is reflected by the second mirror element 21 radiation to a sub-swath 25a, the width of the sub-swath 25a in a direction perpendicular to the scanning direction being smaller than the swath-width 25. The ink deposited in the sub-swath 25a is irradiated shortly after deposition. Hence, the ink deposited in sub-swath 25a forms a glossy image. Ink deposited in the remainder of the swath 25b is not yet irradiated with radiation. Hence, the time interval between deposition of the ink and irradiation of the ink may be relatively long in the remainder of the swath 25b. Thus, in the remainder of the swath 25 glossy parts of the image may be formed. Together, the matt and glossy portions of the image may form a mixed matt-gloss image.

Fig 4C shows a further schematic side view of the first example of the method according to present invention. The page-wide curing array 10, the scanning print unit 7, the first mirror element 20 and the second mirror element 21 are operably connected to the control unit 12. The page-wide curing array 10, the scanning print unit 7, the first mirror element 20 and the second mirror element 21 may also be operably connected to the control unit 12 in the other examples, but this may not be not shown in the figures for clarity reasons. The control unit 12 may control the page-wide curing array 10 to emit radiation. The control unit 12 may further control the scanning print unit 7 to move in reciprocation in the scanning direction and to eject a predetermined pattern of droplets onto the recording medium 16. Further, the control unit may at least controlling at least one of a translational and a rotational movement of at least one of the page-wide array, the first mirror element and the second mirror element.

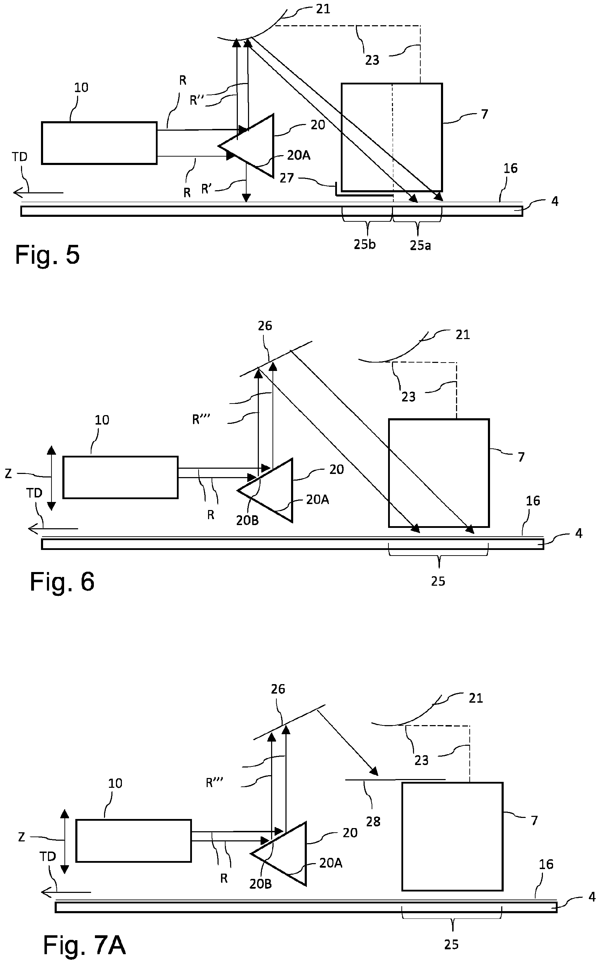

Fig 5 shows a schematic side view of a third example of the method according to present invention. Like in the first and second example, shown in Fig. 4A-4C, a page-wide curing array 10, a scanning print unit 7, a first mirror element 20 and a second mirror element 21 are provided.

In the example shown in Fig. 5, the page-wide curing array 10 and the first mirror element 20 are positioned such that the radiation R emitted by the curing array 10 is reflected in two directions; a first direction of reflection R' and a second direction of reflection R". In Fig. 5, further a blocking element 27 is provided. The blocking element may block part of the radiation reflected by the second mirror, thereby preventing the remainder of the swath from receiving radiation reflected by the second mirror element. The blocking element is preferably positioned at a downstream side, in the transport direction TD, of the scanning print unit.

Fig 6 shows a schematic side view of a fourth example of the method according to present invention. Like in the first and second example, shown in Fig. 4A-4C, a page-wide curing array 10, a scanning print unit 7, a first mirror element 20 and a second mirror element 21 are provided. In the example shown in Fig. 5, a third mirror element 26 is provided. The page-wide curing array 10 and the first mirror element 20 are positioned such that the second mirror surface 20b of the first mirror element 20 receives and reflects radiation, whereas the first mirror surface 20a of the first mirror element 20 does not receive any radiation. The second mirror surface 20b of the first mirror element 20 reflects the radiation R‴ towards the third mirror element 26. The radiation is reflected in the third direction, which is the direction form the first mirror element 20 to the third mirror element 26. The third direction may be parallel to the second direction of reflection. The third mirror element reflects the radiation towards the present swath 25. Consequently, the time interval between deposition of the ink and irradiation of the ink is short in the entire swath. Hence, a matt image is obtained. In the example shown in Fig. 6, the printer is operated in a matt mode, which is a third mode of operation of the printing apparatus.

The third mirror element 26 may be connected to the page-wide curing array 10 (not shown). The third mirror element may be moveable with respect to at least one of the page-wide curing array 10 and the scanning print unit 7.

Fig. 7A shows a schematic side view of a fifth example of the method according to present invention in a first mode of operation. A page-wide curing array 10, a scanning print unit 7, a first mirror element 20 and a second mirror element 21 are provided. Further, a third mirror element 26 and a shielding element 28 are provided. In the method shown in Fig. 7A, the printing apparatus is operated in a matt printing mode. The radiation R emitted by the curing array 10 is directed towards the first mirror element 20. The radiation R is further reflected by the first mirror element 20 to the third mirror element 26 and reflected by the third mirror element 26 towards the recording medium. However, the radiation does not reach the recording medium as it is stopped by the shielding element 28.

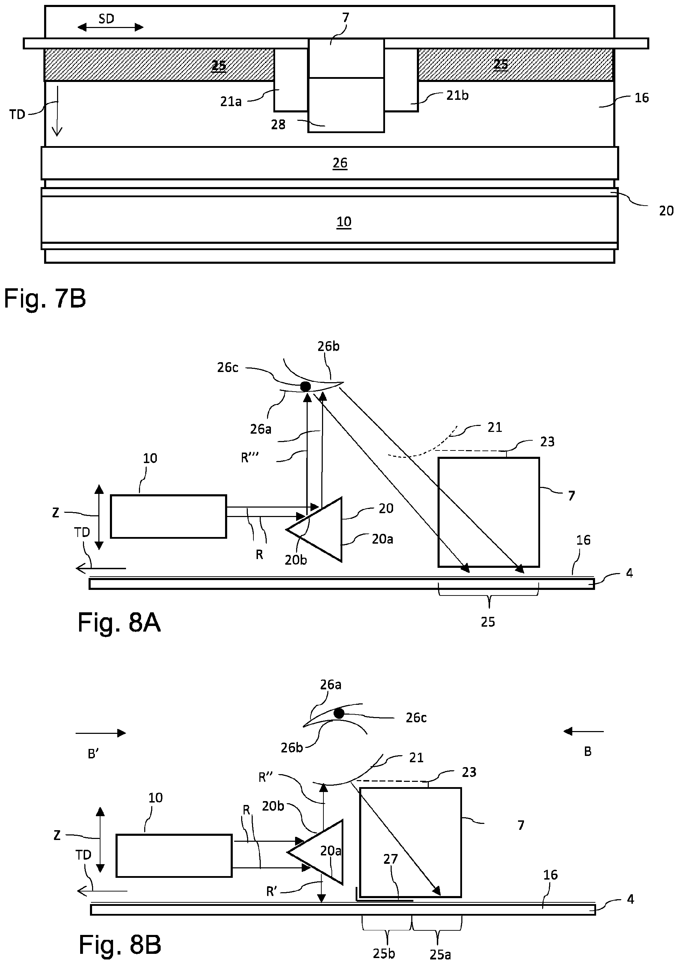

Fig. 7B shows a schematic top view of a fifth example of the method according to present invention. The first mirror element 20 is a page-wide mirror. The second mirror 21 is formed by two mirrors 21a, 21b. Each one of these two mirrors is located at a side edge of the scanning print unit 7. The shielding element 28 is positioned at a downstream side of the scanning print unit 7 in the transport direction and is positioned in between the two mirrors 21a, 21b forming the second mirror element 21. The third mirror element 26 is configured to in operation reflect radiation reflected by the first mirror element. This radiation is reflected to the recording medium in positions upstream and downstream of the print head, in the scanning direction, towards the recording medium, thereby irradiating the ink and curing the ink. The shielding element 28 prevents radiation from irradiating the print head. Because the shielding element 28 has substantially the same length, in the scanning direction, as the print unit 7, the shielding element 28 prevents the print unit 7 from being irradiated but does not prevent the ink deposed on the recording medium 16 from receiving radiation.

Fig. 8A shows a schematic side view of a sixth example of the method according to present invention. A page-wide curing array 10, a scanning print unit 7, a first mirror element 20 and a second mirror element 21 are provided. Further, a third mirror element 26 is provided. In the method shown in Fig. 8A, the printing apparatus is operated in a matt printing mode. The third mirror element comprises two mirror surfaces; a first mirror surface 26a and a second mirror surface 26b. The third mirror element also comprises an axis of rotation 26c. In the example shown in Fig. 8A, the third mirror element is operated in the first reflecting mode. In the first reflecting mode, the first mirror surface 26a is positioned in between the first mirror element 20 and the second mirror surface 26b of the third mirror element. The curing unit 10 emits radiation towards the second surface 20b of the first mirror element 20. The radiation is reflected towards the third mirror element and is reflected by the first mirror surface 26a of the third mirror element 26 to a current swath 25 on the recording medium. Hence, in the first reflecting mode, the ink is irradiated shortly after being deposited on the recording medium 16. A matt image may hence be obtained.

Fig. 8B-8D show different views of a seventh example of the method according to the present invention. In the seventh example, the printing apparatus is operated in the mixed matt-gloss mode.

Fig. 8B shows a first perspective side view of a seventh example of the method according to present invention.

A page-wide curing array 10, a scanning print unit 7, a first mirror element 20 and a second mirror element 21 are provided. Further, the third mirror element 26 is provided. In the example shown in Fig. 8A, the third mirror element is operated in the first reflecting mode.

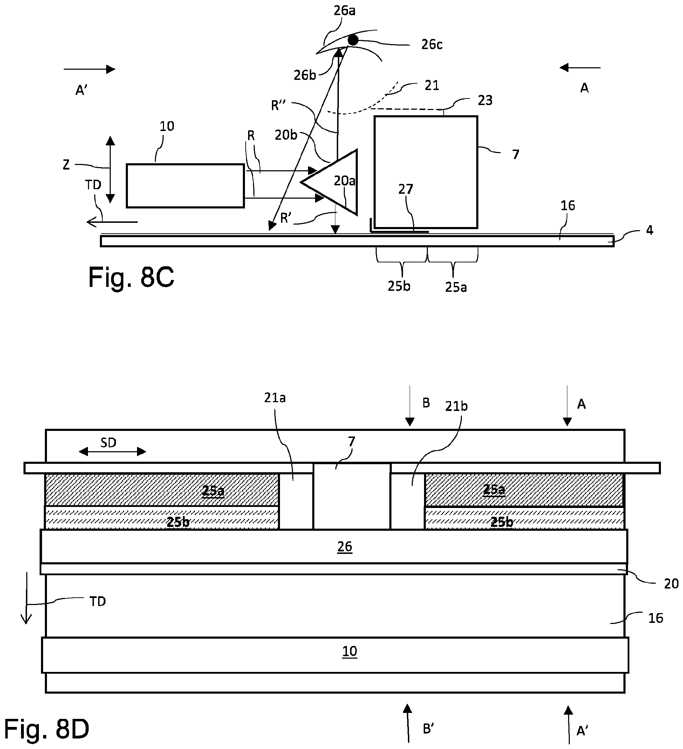

Fig. 8C shows a second perspective side view of a seventh example of the method according to present invention.

Fig. 8D show schematic top view of a seventh example of the method according to present invention in a first mode of operation. A page-wide curing array 10, a scanning print unit 7, a first mirror element 20 and a second mirror element 21 are provided. Further, the third mirror element 26 is provided. The second mirror element is embodied as two mirror boxes 21a, 21b. The two mirror boxes 21a, 21b are provided at both side edges of the scanning print unit 7. In the mixed matt-gloss mode, the swath 25 printed is divided in two sections 25a and 25b. The section 25a is a sub-swath, wherein the ink deposited on the recording medium receives radiation shortly after being deposited on the recording medium. The radiation is reflected towards the sub swath 25a by second mirror element 21. This is shown in more detail in Fig. 8B, wherein a schematic view of the seventh example is shown, along the intersection B-B'.

In the perspective view taken along line B-B', the first mirror element 20 and the second mirror element 21 are positioned such that the radiation reflected by the first mirror element 20 is further reflected by the second mirror element 21 towards the sub-swath 25a. The remainder of the swath 25b is prevented from receiving radiation by radiation blocking element 27. The third mirror element does not receive radiation, as the radiation reflected by the first mirror element 20 is further reflected by second mirror element 21.

The second mirror element according to the seventh example has a limited width in the scanning direction. Hence, at a single point in time, only part of the subswath receives radiation, whether other parts of the subswath may not receive radiation at that exact point in time. These positions may receive radiation reflected by the second mirror element 21 earlier or later.

The remainder of the swath 25b, i.e. the part of the swath 25 not being the subswath 25a, does not receive radiation via the second mirror element 21.

Fig. 8C shows a schematic view of the seventh example is shown, along the intersection A-A'. In the example shown in Fig. 8C, the third mirror element is operated in the second reflecting mode. In the second reflecting mode, the second mirror surface 26b is positioned in between the first mirror element 20 and the first mirror surface 26a of the third mirror element. The radiation reflected by the first mirror element 20a in the second direction is not reflected by the second mirror element over the entire width, because of the limited width of the second mirror element 21a, 21b. At positions were the radiation is not reflected by the second mirror element 21, the radiation is reflected towards the second mirror surface 26b of the third mirror element 26, towards an area of the recording medium positioned downstream of the scanning print unit 7 in the transport direction TD. Hence, the ink deposited on the recording medium 16 may receive a further doses of radiation to further improve the curing of the ink.

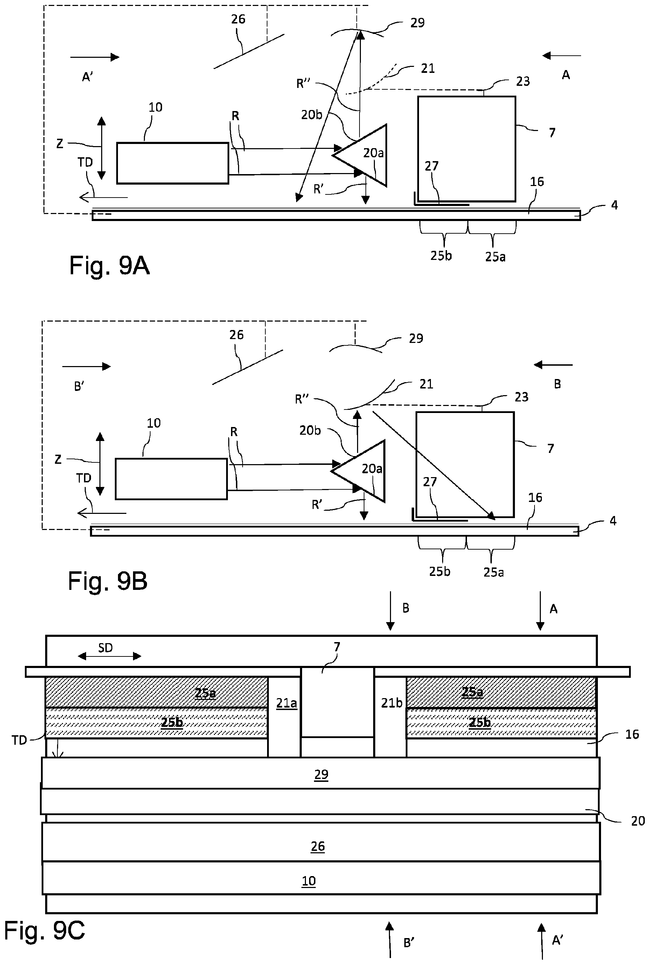

Fig. 9A-9C show different views of a eighth example of the method according to the present invention. In the eighth example, the printing apparatus is operated in the mixed matt-gloss mode. Fig. 9A shows a first perspective side view of a eighth example of the method according to present invention. Fig. 9B shows a second perspective side view of a eighth example of the method according to present invention. Fig. 9C show schematic top view of a eighth example of the method according to present invention. A page-wide curing array 10, a scanning print unit 7, a first mirror element 20 and a second mirror element 21 are provided. Further, a third mirror element 26 and a fourth reflecting element 29 are provided. The third mirror element 26 and the fourth mirror element 29 are both embodied as page-wide mirrors. The second mirror element is embodied as two mirror boxes 21a, 21b. The two mirror boxes 21a, 21b are provided at both side edges of the scanning print unit 7. In the mixed matt-gloss mode, the swath 25 printed is divided in two sections 25a and 25b. The section 25a is a sub-swath, wherein the ink deposited on the recording medium receives radiation shortly after being deposited on the recording medium. The radiation is reflected towards the sub swath 25a by second mirror element 21. This is shown in more detail in Fig. 9B, wherein a schematic view of the seventh example is shown, along the intersection B-B'.

In the perspective view taken along line B-B', the first mirror element 20 and the second mirror element 21 are positioned such that the radiation reflected by the first mirror element 20 is further reflected by the second mirror element 21 towards the sub-swath 25a. The remainder of the swath 25b is prevented from receiving radiation by radiation blocking element 27. The fourth mirror element 29 does not receive radiation, as the radiation reflected by the first mirror element 20 is further reflected by second mirror element 21.

The second mirror element according to the seventh example has a limited width in the scanning direction. Hence, at a single point in time, only part of the subswath receives radiation, whether other parts of the subswath may not receive radiation at that exact point in time. These positions may receive radiation reflected by the second mirror element 21 earlier or later.

The remainder of the swath 25b, i.e. the part of the swath 25 not being the subswath 25a, does not receive radiation via the second mirror element.

Fig. 9A shows a schematic view of the eighth example is shown, along the intersection A-A'. The radiation reflected by the first mirror element 20a in the second direction is not reflected by the second mirror element over the entire width, because of the limited width of the second mirror element 21a, 21b. At positions were the radiation is not reflected by the second mirror element 21, the radiation is reflected towards the fourth mirror element 29, towards an area of the recording medium positioned downstream of the scanning print unit 7 in the transport direction TD. Hence, the ink deposited on the recording medium 16 may receive a further doses of radiation to further improve the curing of the ink.

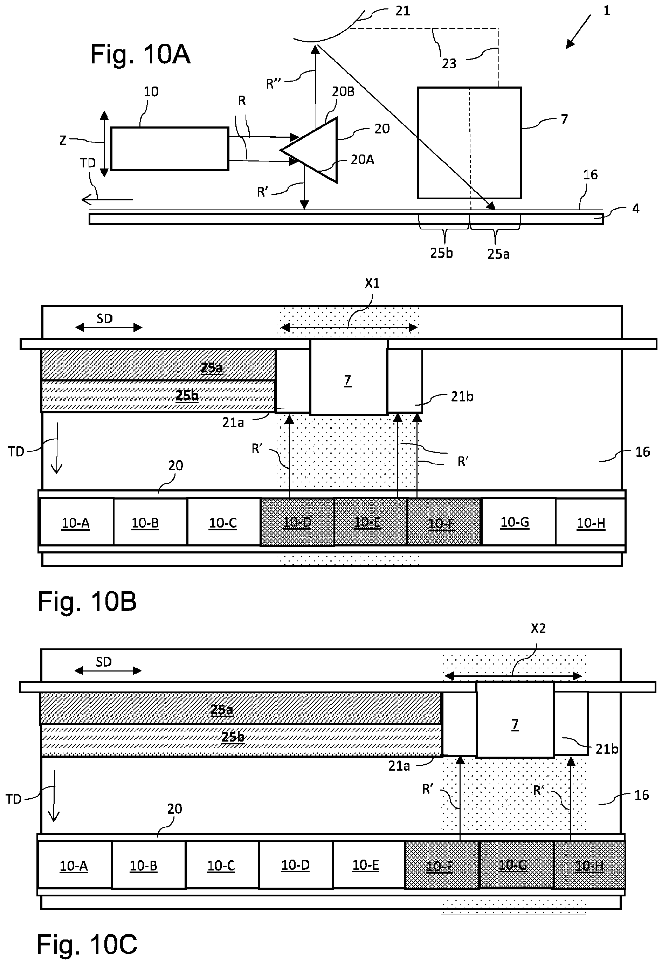

Fig 10A shows a schematic perspective view of a printing apparatus 1. The printing apparatus 1 comprises a scanning print unit 7, a page-wide curing array 10 and a recording medium support 4 that support a recording medium 16. The printing apparatus 1 further comprises a first mirror element 20 and a second mirror element 21. The first mirror element 20 is configured to in operation receive radiation emitted by the curing array 10 and to reflect this radiation to the second mirror element 21. The second mirror 21 element may reflect the radiation towards an area of the recording medium. In the example shown in Fig. 10A, this area of the recording medium is part of a sub swath 25a. The second mirror element 21 comprises two mirror surfaces 21a, 21b as is shown in Fig. 10B and Fig. 10C. The width of the mirror surfaces 21a, 21b in the scanning direction is smaller than the width of the page-wide curing array 10 in the scanning direction SD. In printing operation, the scanning print unit 7 moves in reciprocation in the scanning direction. At a certain point in time, the scanning print unit 7 is at a certain position X. The position X changes with time, as the scanning print unit 7 moves in the scanning direction.

In Fig. 10B, the scanning print unit and the mirror surfaces 21a, 21b of the second mirror element are at a first position X1 along the scanning direction. The page-wide curing array has eight individually controllable units 10A - 10-H. The individually controllable units 10-D, 10-E and 10-F are controlled to be in the On mode and emit radiation that is reflected by the first mirror element 20 to the second mirror element 21. The other individually controllable units, 10-A, 10-B, 10-C, 10-G and 10-H are controlled to be in the Off mode and do not emit radiation. If they would emit radiation, then this radiation would not reach the second mirror element 21. This radiation would hence not irradiate the ink deposited by the print head in the sub swath 25a. Therefore, the individually controllable units, 10-A, 10-B, 10-C, 10-G and 10-H are controlled to be in the Off mode.

In Fig. 10C, the scanning print unit and the mirror surfaces 21a, 21b of the second mirror element are at a position X2 along the scanning direction. Position X2 is different from position X1, shown in Fig. 10B. The individually controllable units 10-F - 10-H are controlled to be in the On mode and emit radiation that is reflected by the first mirror element 20 to the second mirror element 21. The other individually controllable units, 10-A - 10-E are controlled to be in the Off mode and do not emit radiation. If they would emit radiation, then this radiation would not reach the second mirror element 21. This radiation would hence not irradiate the ink deposited by the print unit 7 in the present swath 25. Therefore, the individually controllable units 10-A - 10-E are controlled to be in the Off mode. By selectively switching individually controllable units Of and On, the ink deposited on the recording medium 16 can be suitably irradiated to cure the ink in the sub swath, without wasting energy by emitting radiation that may not contribute to curing the ink at the desired position on the recording medium.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually and appropriately detailed structure. In particular, features presented and described in separate dependent claims may be applied in combination and any combination of such claims are herewith disclosed. Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

## Claims

1. Method for operating a printing apparatus, the printing being operable in a plurality of modes, the plurality of modes comprising at least a mixed matt-gloss mode, the printing apparatus comprising:
• a page-wide curing array, configured to in operation emit radiation;
• a scanning print unit, configured to in operation move in a scanning direction;
• medium support for supporting a recording medium;
• a first mirror element configured to in operation receive radiation from the page-wide curing array and reflect the radiation in at least one direction of reflection, the at least one direction of reflection being dependent on a mode of operation of the printing apparatus;
• a second mirror element, the second mirror element being positioned at a lateral edge of the scanning print unit, the second mirror element being configured to in operation receive radiation from the first mirror element in the mixed matt-gloss mode and reflect radiation to a sub-swath, the width of the sub-swath in a direction perpendicular to the scanning direction being smaller than the swath-width ;
the method comprising the steps of:
• determining a mode of operation of the printer;
• controlling the scanning print unit to deposit a radiation-curable ink onto the recording medium to print an image swath having a swath-width;
• controlling the page-wide curing array to emit radiation,
• controlling, based on the determined mode of operation of the printer, the first mirror element and the second element to selectively receive and reflect radiation by controlling at least one of a translational and a rotational movement of at least one of the page-wide array, the first mirror element and the second mirror element, wherein in the mixed matt-gloss mode, the radiation emitted by the page-wide curing array is reflected in a first direction and a second direction.

2. Method according to claim 1, wherein the printer further comprises a radiation blocking element configured to in operation block part of the radiation reflected by the second mirror.

3. Method according to claim 1, wherein the printer is further operable in a gloss mode, the direction of reflection is a direction from the first mirror element to an area of the recording medium positioned downstream of the scanning print unit in a direction of recording medium transport.

4. Method according to claim 1, wherein the printer is further operable in a matt mode, the printer further comprising a third mirror element, in the matt mode the first mirror element reflecting radiation in a third direction, the third direction being directed from the first mirror element to the third mirror element, the third mirror element being configured to reflect radiation to the image swath.

5. Method according to claim 1, wherein the first mirror element comprises at least a first mirror surface and a second mirror surface, wherein at least one of the first and second mirror surfaces receives radiation emitted by the page-wide array.

6. Method according to claim 5, wherein in the mixed matt-gloss mode both the first and second mirror surfaces receives radiation emitted by the page-wide array.

7. Method according to claim 5, wherein the receipt of radiation emitted by the page-wide array by the at least one of the first and second mirror surface is controlled by a relative translational movement of the page-wide array with respect to the first mirror element in the z-direction.

8. Method according to any of the preceding claims, wherein the scanning print unit is provided with a shielding element, the shielding element being configured to in operation in the matt mode preventing radiation from reaching the scanning print unit.

9. Method according to claim 8, wherein the shielding element has a length extending in the scanning direction, the length of the shielding element being essentially the same as the length of the scanning print unit.

10. Method according to any of the preceding claims, wherein the first mirror element has a length extending in the scanning direction, the length of the first mirror element being essentially the same as the length of the page-wide array.

11. Method according to any of the preceding claims, wherein the second mirror element comprises two mirror surfaces, a first mirror surface being positioned at a first lateral edge of the scanning printing unit and second mirror surface being positioned at a second lateral edge of the scanning printing unit.

12. Method according to any of the preceding claims, wherein the third mirror element is operable in two reflecting modes, wherein in the matt mode the third mirror element is operated in a first reflecting mode and in the mixed matt-gloss mode the third mirror element is operated in a second reflecting mode, wherein in the first reflecting mode radiation is reflected from the third mirror element to a current swath on the recording medium, and wherein in the second reflecting mode radiation is reflected the third mirror element to an area of the recording medium downstream of the scanning print unit.

13. Method according to any of the preceding claims, wherein the page wide curing array comprising a number of individually controllable units, the individually controllable units being arranged along the first direction, the individually controllable units being configured to in operation emit radiation, wherein the individually controllable units are operable in at least two modes, the at least two modes including an Off mode and an On mode, wherein the individually controllable units are controlled to be in a mode other than the OFF mode if there are positioned such that the radiation emitted by these elements is reflected towards the second mirror element.

14. Printing apparatus comprising:
• a page-wide curing array, configured to in operation emit radiation;
• a scanning print unit, configured to in operation move in a scanning direction;
• medium support for supporting a recording medium;
• a first mirror element configured to in operation receive radiation from the page-wide curing array and reflect the radiation in at least one direction of reflection, the at least one direction of reflection being dependent on a mode of operation of the printing apparatus;
• a second mirror element, the second mirror element being positioned at a lateral edge of the scanning print unit;
• a control unit, configured to in operation control the printing apparatus to perform a method according to any of the claims 1 - 13.

15. A software product comprising program code on a non-transitory machine-readable medium, wherein the program code, when loaded into a controller of a printing apparatus with at least one printing unit for depositing a radiation-curable fluid, a page-wide curing array and a control unit, causes the controller to perform a method according to any of the claims 1 - 13.
